Europäisches Patentamt

European Patent Office

Office européen des brevets

(19)

(11) Publication number: **0 204 542 B1**

## EUROPEAN PATENT SPECIFICATION

(12)

(45) Date of publication of patent specification: **02.12.92** (51) Int. Cl.⁵: **G06K 7/08**

(21) Application number: **86304204.0**

(22) Date of filing: **03.06.86**

(54) **Identification system.**

(30) Priority: **05.06.85 GB 8514219**

(43) Date of publication of application:
**10.12.86 Bulletin 86/50**

(45) Publication of the grant of the patent:
**02.12.92 Bulletin 92/49**

(84) Designated Contracting States:
**AT BE CH DE FR GB IT LI LU NL SE**

(56) References cited:
**AU-A- 515 616**         **DE-A- 3 242 551**
**FR-A- 2 542 792**       **US-A- 4 277 837**
**US-A- 4 517 563**       **US-A- 4 546 241**

(73) Proprietor: **PAC INTERNATIONAL LIMITED**
**Green Lane Romiley**
**Stockport, Cheshire, SK6 3JG(GB)**

(72) Inventor: **The inventor has agreed to waive his entitlement to designation**

(74) Representative: **Ouest, Barry et al**
**M'CAW & Co. 41-51 Royal Exchange Cross Street**
**Manchester M2 7BD(GB)**

Rank Xerox (UK) Business Services

EP 0 204 542 B1

## Description

This invention relates to an identification system of the kind comprising a personal identification device, such as an identification card, which can be verified by automatic reading equipment for example to provide access to security premises or for other purposes.

Identification cards are known which have identifying data which can be read with a magnetic reader. There are also cards which have data which can be read with a bar-code reader. In each case there is the problem that the reading equipment operates with a wiping or scanning action utilising a small gap between the card and the reader whereby the problem arises that identification of data can be readily disturbed by vandalisation of the equipment or accumulation of dirt on the card or within the equipment. Infra-red reading equipment similarly is subject to disturbances in so far as it is necessary to insert an identification card into an aperture in which the card is maintained accurately in predetermined disposition relative to the reader.

Transponder proximity card reading systems are less prone to disturbance and give good hand-free operation, but these can be inconvenient and expensive in so far as a battery power supply is provided within the identification card and sophisticated control circuitry is required to ensure adequate battery life. There are proximity reading systems which do not require a battery power source but these rely on the use of complex and expensive reading equipment.

US-A-4517563 describes an identification system as defined in the precharacterising portion of claim 1, having a passive transponder mounted on an object, such as an animal, to be identified. The passive transponder has a resonant circuit including a coil and a coding circuit which is powered by an electric signal received by the coil from an active transponder. The coding circuit modulates the load on the resonant circuit by feeding a coded output through a resistor under the control of a multivibrator.

FR-A-2542792 describes a generally similar system using a passive electronic key in the form of a card which incorporates a coil, a power supply circuit, and a microprocessor control circuit incorporating a clock.

An aim of the present invention is to provide a simple, convenient and inexpensive identification system which is reliable in operation and utilises an identification device which need not be provided with an internal battery power source.

The identification system comprises reading equipment and an identification device movable into proximity to said reading equipment to be read thereby,

said reading equipment comprising a first coil means, an energizing circuit connected to said first coil means for effecting energization thereof, and a reading circuit connected to said first coil means for interpreting electrical changes therein,

said identification device comprising:

a second coil means in which an a.c. current is induced by said energized first coil means when said identification device is in said proximity to said reading equipment so as to effect coupling of said first and second coil means,

a power supply circuit connected to said second coil means so as to produce a d.c. supply by rectification of said induced a.c. current,

a timing device connected to said power supply circuit to be powered thereby so as to produce timing signals,

a code device connected to said power supply circuit to be powered thereby and connected to said timing device to receive said timing signals therefrom, said code device being arranged to produce a series of switching signals having a pattern corresponding to a digital code stored in said code device in response to actuation by and at a rate determined by said timing signals,

a sole resistive load circuit connected across the said second coil means and the power supply circuit and consisting of a resistive load element and a controllable switching device, said controllable switching device being connected to said power supply circuit to be powered thereby and being arranged for switching said resistive load element into and out of connection across said second coil means so as to effect changes in the resistive loading thereof and consequently to produce corresponding said electrical changes in said first coil means, said controllable switching device being connected to said code device to receive therefrom and to be switched by said code device switching signals.

The identification system is further characterised in that the timing device is connected to said second coil means so as to produce timing signals at a rate which is a count down harmonic of the frequency of said induced a.c. current.

With this arrangement power necessary for the transfer of information from the identification device to the reading equipment can be derived wholly from the energisation of the said first coupling device via the mutually coupled said first and second coupling devices whereby the provision of an internal battery power source in the identification device can be obviated. Moreover, in so far as it is only necessary to arrange the identification device in appropriate proximity to the reading equipment for reading to be effected, verification of the identification device can be effected in a particularly convenient manner without requiring any wiping or other action prone to disturbance by vandalisation of the reading equipment or accumulation of dirt. Further, the reading equipment and identification card can be constructed in a particularly simple and inexpensive manner having regard to the reliance on coupling technique which do not necessitate complicated circuitry or components.

The identification device may be in the form of a personal identification card, i.e. a small, thin card- or plate-shaped structure which can be carried in a person's pocket. However, other shapes and sizes of device may also be used as desired.

The energising circuit may be arranged to generate a relatively high frequency (e.g. radio frequency) oscillation and/or a lower frequency alternating current as desired and as appropriate.

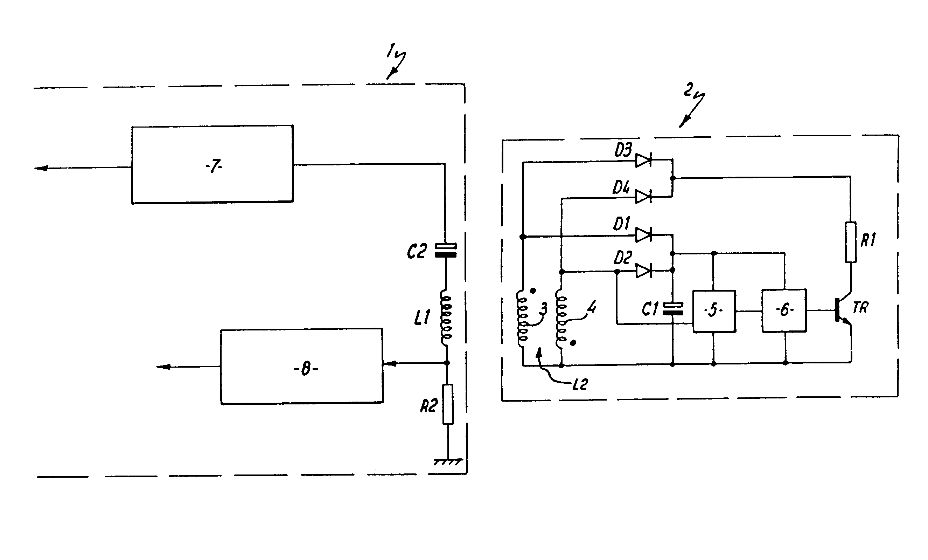

The invention will now be described further by way of example only and with reference to the accompanying drawing which is a circuit diagram of one form of an identification system according to the invention.

The identification system comprises fixed reading equipment 1 which is used in conjunction with a personal identification card 2. By way of example, the reading equipment 1 may be mounted at an entrance to premises so as to open a security door or barrier and thereby provide access to the premises when the identification card 2 of an authorised person is presented to and read by the equipment.

The identification card 2 may comprise a thin rectangular plastics plate which can be conveniently carried in a person's pocket. The plate incorporates an electronic circuit comprising various electronic components which are embedded within the plate, such components thereby being electrically insulated and physically sealed from the environment by the plastics material of the plate.

The electronic circuit comprises two series-connected coils 3, 4, which may be wire coils or printed circuit arrangements and which may be defined by a single centre-tapped winding L2. The coils 3, 4 are connected, via two diodes D1, D2 across a smoothing capacitor C1 which is connected across a time-based trigger circuit 5 and an interconnected non-volatile data store or measuring device 6. The coils 3, 4 are also connected, via a further pair of diodes D3, D4, across the emitter-collector circuit of a transistor TR, which circuit includes a load resistor R1. The data store 6 has an output connected to the base of the transistor TR. The trigger circuit 5 has an input which is connected directly to one of the coils 4.

The reading equipment 1 has an electronic circuit within a suitable housing. The circuit comprises a coil L1 connected in series with a resistor R2, a capacitor C2, and an oscillator 7. The coil L1 is also connected to a reading circuit 8. The reading circuit 8 and the oscillator 7 are connected to an interpretation circuit (not shown) which is arranged to operate a door opening device or other mechanism. The reading equipment 1 includes a local power supply (not shown).

In use, the card 2 is held in a position at which the coils 3, 4 are close to but physically separate from the coil L1 of the reading equipment 1. The oscillator 7 of the reading equipment 1 energises or excites the coil L1 at a high RF frequency or inductive frequencies whereby a current is induced in the coils 3, 4, the coil L1 and the coils 3, 4 acting as a loosely coupled transformer. The diodes D1-D4 produce a d.c. supply from the induced current to power the transistor circuit TR, R1 and the trigger circuit 5 and data store 6. The trigger circuit 5 feeds trigger signals to the data store 6 at a regular bit rate determined by the induced current. The rate is be a count down harmonic of the frequency of the induced current.

The data store 6 produces a digital coded output in terms of a series of on and off switching signals which are applied to the base of the transistor TR. The resistor R1 is thereby switched on and off as a load across the coils 3, 4 so as to modify the coupling of the coils 3, 4 with the coil 1 in accordance with the predetermined coding of the stored data. That is, the current flowing through the coil L1 is modulated by the power drawn through the resistor R1. The reading circuit 8 identifies this change in the coupling (i.e. the modulation of the current in the coil L1) and produces an output, as a series of 0 and 1 data bits corresponding to the data stored in the identification card. It will be understood that the reading circuit 8 is fed with the same clock signal as that derived by the trigger circuit 5 to enable separation of the coded data from the signals at the coil L1.

It will be seen that the diodes D1-D4 are arranged to produce two separate power supplies, one of which is used for the trigger circuit 5 and data store 6 and the other of which is used for the resistor R1 and the transistor TR. In this way, adequate signal definition and data rates can be obtained. That is, the immediate load change induced by the switching of the transistor TR is seen as a current change at the coil L1 irrespective of the smoothing action of the capacitor C1.

The output of the reading circuit 8 is compared with stored codes and in the event that the output is verified as corresponding to an authorised access code, the security door or barrier is automatically opened.

It will be understood that verification can be effected simply by locating the card 2 generally in close proximity to the coil L1 of the reading equipment. Data is not read in sequence from different regions of the card 2 (as is the case with magnetic or bar-code or infra-red reading) whereby it is not essential to ensure that the card 2 is positioned in precise disposition relative to the reading equipment 1. The system is therefore not prone to ready disturbance by vandalisation or accumulation of dirt.

There are also other advantages as follows:

The system is simple and inexpensive to manufacture. The equipment 1 does not require complicated reading mechanisms, and the card 2 does not require any internal battery power source. The components used are all of a simple, convenient nature.

The system provides reliable and versatile security. An extremely large number of differently coded identification cards can be readily produced for use with the same reading equipment, by appropriate programming or selection of the data in the data store. Different code combinations and also different coding techniques are possible.

The card in convenient to carry and reading of the card is not readily disturbed due to dirt or oil or grease or water or surface scratches on the card or due to adverse environmental influences including high magnetic fields.

The derived output of the reading circuit readily interfaces with data processing equipment.

Any suitable arrangement may be provided for locating the card 2 relative to the reading equipment 1 and for initiation of the reading operation. Thus, it may only be necessary to hold the card 2 in front of the equipment 1 or alternatively there may be a slot or tray in which the card is placed.

The equipment may be continuously operable. Alternatively it may come into operation for reading purposes only when a card is presented for reading, operation of the equipment being triggered automatically by the presence of the card or by operation of a manual switch or the like. The reading operation may be performed once on the card or may be performed continually for a prolonged operational period.

It is of course to be understood that the invention is not intended to be restricted to the details of the embodiment described above. Thus, for example, the system is not restricted to use in the context of safeguarding access to premises but may be used any other suitable purpose where security access to a building or equipment or machine or similar verification is required. Also, the reading equipment may additionally be capable of reading conventional identification cards e.g. using magnetic or infra-red readers.

## Claims

1. An identification system comprising reading equipment and an identification device movable into proximity to said reading equipment to be read thereby,

said reading equipment comprising a first coil means (L1), an energizing circuit (7) connected to said first coil means for effecting energization thereof, and a reading circuit (8) connected to said first coil means for interpreting electrical changes therein,

said identification device comprising:

a second coil means (3, 4) in which an a.c. current is induced by said energized first coil means (L1) when said identification device is in said proximity to said reading equipment so as to effect coupling of said first and second coil means (L1, 3),

a power supply circuit (D1-D4) connected to said second coil means (3) so as to produce a d.c. supply by rectification of said induced a.c. current,

a timing device (5) connected to said power supply circuit to be powered thereby so as to produce timing signals,

a code device (6) connected to said power supply circuit to be powered thereby and connected to said timing device (5) to receive said timing signals therefrom, said code device being arranged to produce a series of switching signals having a pattern corresponding to a digital code stored in said code device in response to actuation by and at a rate determined by said timing signals,

a sole resistive load circuit connected across the said second coil means and the power supply circuit and consisting of a resistive load element (R1) and a controllable switching device (TR), said controllable switching device being connected to said power supply circuit to be powered thereby and being arranged for switching said resistive load element (R1) into and out of connection across said second coil means (3, 4) so as to effect changes in the resistive loading thereof and consequently to produce corresponding said electrical changes in said first coil means (L1), said controllable switching device (TR) being connected to said code device (6) to receive therefrom and to be switched by said code device switching signals.

characterised in that the timing device (5) is connected to said second coil means (3, 4) so as to produce timing signals at a rate which is a count down harmonic of the frequency of said induced a.c. current.

## Patentansprüche

1. Identifizierungssystem mit einem Lesegerät und einer Identifizierungsvorrichtung, welche zwecks Auslesens in die Nähe des Lesegerätes zu bringen ist;

das Lesegerät enthält eine erste Spulenanordnung (L1), einen Versorgungsstromkreis (7), der an die erste Spulenanordnung zu deren Erregung angeschlossen ist, und eine Leseschaltung (8), die an die erste Spulenanordnung zwecks Auswertung von Änderungen von deren elektrischem Zustand angeschlossen ist;

die Identifizierungsvorrichtung enthält:

eine zweite Spulenanordnung (3, 4), in der bei Erregung der ersten Spulenanordnung (L1) ein Wechselstrom induziert wird, wenn sich die Identifizierungsvorrichtung so nahe an dem Lesegerät befindet, daß die erste und die zweite Spulenanordnung (L1, 3) miteinander gekoppelt werden,

einen Stromversorgungskreis (D1-D4), der an die zweite Spulenanordnung (3) angeschlossen ist, um durch Gleichrichtung des induzierten Wechselstroms eine Gleichstromversorgung zu liefern,

einen Zeittaktgeber (5), der an den Stromversorgungskreis angeschlossen und von ihm zwecks Erzeugung von Taktsignalen mit Strom versorgt wird,

eine Codeeinrichtung (6), die zur Stromversorgung an den Stromversorgungskreis angeschlossen und mit dem Zeittaktgeber (5) zum Empfang dieser Taktsignale verbunden ist, wobei die Codeeinrichtung als Reaktion auf die Taktsignale eine Reihe von Schaltsignalen erzeugt, deren Schema eines in der Codeeinrichtung gespeicherten digitalen Code entspricht, und deren Taktfrequenz von den Taktsignalen bestimmt wird,

einen einzelnen Lastwiderstands-Zweig, der parallel zu der zweiten Spulenanordnung und dem Stromversorgungskreis geschaltet ist, und der ein Lastwiderstandselement (R1) und einen steuerbaren elektronischen Schalter (TR) aufweist, der an den Stromversorgungskreis zwecks Stromversorgung angeschlossen und dazu bestimmt ist, das Lastwiderstands-Element (R1) parallel zu der zweiten Spulenanordnung (3, 4) zu- und abzuschalten, derart, daß deren Widerstandsbelastung wechselt und als Folge davon entsprechende elektrische Änderungen in der ersten Spulenanordnung (L1) auftreten, wobei der steuerbare Schalter (TR) an die Codeeinrichtung (6) zum Empfang von Codeschaltsignalen angeschlossen ist, die den Schalter betätigen,

dadurch gekennzeichnet, daß der Zeittaktgeber (5) an die zweite Spulenanordnung (3, 4) angeschlossen ist, um Taktsignale mit einer Taktfrequenz zu erzeugen, die eine in digitaler Abwärtszähltechnik erzeugte Sub-Harmonische der Frequenz des induzierten Wechselstromes ist.

**Revendications**

1. Système d'identification comprenant un équipement de lecture et un dispositif d'identification qui peut se déplacer à proximité dudit équipement de lecture pour être lu par ce dernier, ledit équipement de lecture comprenant des premiers moyens formant bobine (L1), un circuit d'activation (7) connecté sur lesdits premiers moyens formant bobine en vue de réaliser leur activation, et un premier circuit de lecture (8) connecté sur lesdits premiers moyens formant bobine pour interpréter des variations électriques à l'intérieur de ces dernières, ledit dispositif d'identification comprenant :
   - des seconds moyens formant bobine (3,4) dans lesquels un courant alternatif est induit par lesdits premiers moyens formant bobine (L1) lorsqu'ils sont activés, lorsque ledit dispositif d'identification se trouve dans ladite proximité par rapport audit équipement de lecture afin de réaliser le couplage desdits premiers et seconds moyens formant bobine (L1),
   - un circuit d'alimentation (D1-D4) connecté auxdits seconds moyens formant bobine (3) de manière à produire une alimentation en courant continu par redressement dudit courant alternatif induit,
   - un dispositif de cadencement (5) connecté sur ledit circuit d'alimentation afin d'être alimenté par ce dernier de manière à fournir des signaux de cadencement,
   - un dispositif de code (6) connecté sur ledit circuit d'alimentation afin d'être alimenté par ce dernier et connecté sur ledit dispositif de cadencement (5) afin de recevoir lesdits signaux de cadencement fournis par ce dernier, ledit dispositif de code étant aménagé de manière à produire une série de signaux de commutation présentant une configuration correspondant à un code numérique mémorisé dans ledit dispositif de code en réponse a l'activation par lesdits signaux de cadencement et à une vitesse déterminée par lesdits signaux de cadencement,

- un circuit de charge uniquement résistive connecté aux bornes desdits seconds moyens formant bobine et du circuit d'alimentation et constitué par un élément de charge résistif (R1) et un dispositif de commutation commandable (TR), ledit dispositif de commutation commandable étant connecté à ladite source d'alimentation pour être alimenté par cette dernière et étant aménagé pour commuter ledit élément de charge résistif (R1) dans l'état branché ou débranché sur ledit second moyen formant bobine (3,4) de manière à réaliser des variations de la charge résistive de ce dernier et de produire, par conséquent, lesdites variations électriques dans lesdits premiers moyens formant bobine (L1), ledit dispositif de commutation commandable (TR) étant connecté audit dispositif de code (6) pour recevoir de ce dernier des signaux de commutation et pour être commuté par lesdits signaux de commutation du dispositif de code,

caractérisé en ce que le dispositif de cadencement (5) est connecté auxdits seconds moyens formant bobine (3,4) de manière à produire des signaux de cadencement à une vitesse qui est une harmonique de décomptage de la fréquence dudit courant alternatif.